# EUROPÄISCHE PATENTSCHRIFT

(11) **EP 2 435 288 B1**
(45) Veröffentlichungstag und Bekanntmachung des Hinweises auf die Patenterteilung: **17.07.2013**
(21) Anmeldenummer: 10721499.1
(22) Anmeldetag: 25.05.2010
(51) Int. Cl.: B62D 35/02

(54) **FAHRZEUG MIT EINER LUFTLEITEINRICHTUNG**
VEHICLE WITH AN AIR GUIDING DEVICE
VÉHICULE AVEC UN DISPOSITIF DÉFLECTEUR D'AIR

(30) Priorität: 26.05.2009 DE 102009022684
(43) Veröffentlichungstag der Anmeldung: 04.04.2012
(73) Patentinhaber: Bayerische Motoren Werke Aktiengesellschaft, 80809 München (DE)
(72) Erfinder: EICHENTOPF, Marcel, 85375 Neufahrn (DE); NAEVE, Lars, 81829 München (DE); ZIVKOV, Vanja, 80797 München (DE); SEITZ, Christian, 85774 Unterföhring (DE)
(74) Vertreter: Schernhammer, Herbert
(86) Internationale Anmeldenummer: PCT/EP2010/057177
(87) Internationale Veröffentlichungsnummer: WO 2010/136460

(56) Entgegenhaltungen:
- EP-A2- 1 013 540
- DE-A1- 3 239 946
- DE-A1- 4 214 912

## Beschreibung

Die Erfindung betrifft ein Kraftfahrzeug mit einer Luftleiteinrichtung nach dem Oberbegriff des Anspruchs 1.

Ein gattungsgemäßes Kraftfahrzeug mit einer Luftleiteinrichtung ist beispielsweise aus der DE 42 14 912 A1 bekannt. Die bekannte Luftleiteinrichtung ist an einem unteren Querlenker einer Hinterradaufhängung befestigt und leitet den Luftstrom am Querlenker sowie an weiteren Teilen der Radaufhängung vorbei. Hierdurch wird im Bereich der hinteren Radaufhängung eine Reduzierung des Luftwiderstands erreicht. Die Wirkfläche der Luftleiteinrichtung ist im Wesentlichen in einer etwa vertikalen Ebene angeordnet, nach Art eines Spoilers, der vor den Elementen der hinteren Radaufhängung angeordnet ist und während der Fahrt des Kraftfahrzeugs den Luftstrom über die Bauteile der Radaufhängung hinweg leitet.

Ferner ist aus der EP 0 778 187 B1 eine ebenfalls etwa vertikal ausgerichtete Luftleiteinrichtung bekannt, die den Luftstrom am Unterboden des Kraftfahrzeugs zur Kühlung von Radbremsen umlenkt. Außerdem ist aus der EP 0 888 956 A1 eine flächige Abdeckung im hinterachsnahen Bodenbereich eines Kraftfahrzeuges bekannt, die elastisch ausgebildet ist und somit Bewegungen der Hinterachse zulässt, indem sich die Abdeckung elastisch verformt.

Aufgabe der Erfindung ist es, das bekannte Kraftfahrzeug weiterzubilden, mit dem Ziel, eine aerodynamisch besonders wirksame Form zu erreichen.

Diese Aufgabe wird durch ein Kraftfahrzeug mit einer Luftleiteinrichtung mit den Merkmalen des Anspruchs 1 gelöst.

Kerngedanke ist es hierbei, eine Luftleiteinrichtung vorzusehen, die im Wesentlichen etwa parallel zur Fahrbahn gerichtet ist und dabei unter aerodynamischen Gesichtspunkten geformt ist, mit einem vorderen sowie einem hinteren Abschnitt, die aufeinander abgestimmt sind und die aerodynamischen Gegebenheiten sowohl vor als auch hinter der Hinterachse berücksichtigen. Die beiden Abschnitte der Luftleiteinrichtung sind mit unterschiedlichen Winkeln gegenüber einer horizontalen Ebene angestellt. Hierbei sind die beiden Abschnitte nicht zwangsläufig ebenflächig ausgebildet, sondern können zweidimensional oder dreidimensional gekrümmt sein, so dass das Merkmal der "unterschiedlichen Winkel" sich gegebenenfalls auf eine durch die Fläche des jeweiligen Abschnitts gelegte mittlere Ebene bezieht. Die beiden Abschnitte der Luftleiteinrichtung sind, ausgehend von dem Übergangsbereich zwischen den beiden Abschnitten, schräg aufwärts gerichtet. Somit hat die Luftleiteinrichtung in der Seitenansicht eine nach oben offene Wannenform. Insbesondere der hintere Abschnitt der Luftleiteinrichtung kann jedoch nahezu parallel zur Fahrbahn verlaufen.

Die Lageangabe "vor / hinter der Hinterachse" bezieht sich auf die Verbindungslinie der Radmittelpunkte der Hinterräder.

Durch die Anstellung der beiden Abschnitte, gegebenenfalls in Verbindung mit einer geeigneten Profilierung und/oder Konturierung der Luftleiteinrichtung, wird eine hohe aerodynamische Wirksamkeit erreicht, mit einer widerstandsarmen Umströmung des Hinterachsbereichs und einem verlustarmen Abströmen der Unterbodenströmung hinter der Hinterachse. Durch die Erfindung werden Anteile der Strömung in Fahrzeugquerrichtung reduziert und Verwirbelungen der Strömung minimiert. Der verlustbehaftete Druckanstieg im Bereich der Hinterachse wird durch die Gestaltung der Luftleiteinrichtung in eine gerichtete Strömung mit höherer kinetischer Energie gewandelt. Durch die Erfindung wird der Luftwiderstand des Kraftfahrzeugs reduziert und der Auftrieb an der Hinterachse minimiert. Die Unterbodenströmung wird in optimierter Weise an den Komponenten der Hinterachse vorbei geleitet. Hierdurch wird verhindert, dass die Strömung auf Achsbauteile direkt auftrifft, sich hierdurch in verschiedene Richtungen aufspaltet, in den Unterbodenabschnitt im Bereich der Hinterachse eindringt und dort verschiedene Bauteile widerstandserhöhend um- und durchströmt.

In einer vorteilhaften Ausgestaltung der Erfindung verläuft der Übergangsbereich etwa auf der Höhe des unteren Endabschnitts des Radführungselements, an dem die Luftleiteinrichtung befestigt ist. Somit wird das Radführungselement abdeckt, wobei die Luftleiteinrichtung möglichst nahe am Radführungselement angeordnet ist, um die Bodenfreiheit des Kraftfahrzeugs nicht einzuschränken. Die Abdeckung durch die Luftleiteinrichtung beschränkt sich in der Regel nicht auf das betreffende Radführungselement, sondern umfasst weitere Bauteile der Hinterachse.

In einer bevorzugten Ausführungsform der Erfindung befindet sich vor der Hinterachse ein Kraftstoffbehälter, der vom Fahrtwind umströmt wird. Diese Umströmung des Kraftstoffbehälters erhöht zwar den Luftwiderstandsbeiwert des Kraftfahrzeugs, ist jedoch zur Kühlung des Kraftstoffbehälters erforderlich. Um die oben geschilderte Durchströmung des Hinterachsbereichs des Kraftfahrzeugs zu reduzieren, schließt sich an den Kraftstoffbehälter die Vorderkante der Luftleiteinrichtung an. Um das Einströmen des Fahrtwindes in den Hinterachsbereich zu verhindern, ist dabei die Vorderkante der Luftleiteinrichtung bevorzugt oberhalb der Unterseite des Kraftstoffbehälters angeordnet. Unter Kraftstoffbehälter ist ein Behältnis zur Aufnahme von flüssigem oder gasförmigem Kraftstoff ebenso zu verstehen wie beispielsweise ein Behältnis zur Aufnahme wenigstens einer Zelle zur Speicherung elektrischer Energie.

Das erfindungsgemäße Kraftfahrzeug mit einer Luftleiteinrichtung kann das Einströmen von Luft in den Hinterachsbereich nicht vollkommen verhindern. Um ein Ausströmen der Luft aus dem Hinterachsbereich zu ermöglichen, ist in einer bevorzugten Ausführungsform der Erfindung im Bereich des fahrtrichtungsabgewandten Endbereichs der Luftleiteinrichtung ein Freiraum zwischen Luftleiteinrichtung und Unterboden des Kraftfahrzeugs, beispielsweise in Form eines Auslassspaltes, vorgesehen.

Zur Erhöhung der aerodynamischen Wirksamkeit kann die Luftleiteinrichtung an ihrem fahrtrichtungsabgewandten Endabschnitt eine Abrisskante oder eine andere Strömungsleitmaßnahme, wie beispielsweise einen Gegenschwung, aufweisen.

Bevorzugt erstreckt sich die Luftleiteinrichtung über die gesamte oder zumindest nahezu gesamte Breite des Radführungselements, wodurch eine Durchströmung des Hinterachsbereichs wirksam reduziert wird. Je nach Ausgestaltung des Hinterachsbereichs kann sich die rechte und/oder die linke Luftleiteinrichtung auch über das jeweilige Radführungselement in Richtung der Fahrzeugmitte hinaus erstrecken.

Die Luftleiteinrichtung kann auch eine gesonderte Luftleitfläche aufweisen, beispielsweise in Form einer Abwinkelung, um der Radbremse des Hinterrades der Hinterachse gezielt Kühlluft zuzuführen, wie an sich aus der EP 0 778 187 B1 bekannt.

Aufgrund der Anordnung der Luftleiteinrichtung in etwa in einer horizontalen Ebene ist die Luftleiteinrichtung in besonderem Maße dafür geeignet, einen Teil des nach unten offenen Ausschnittes der Hinterachse im Unterboden des Kraftfahrzeugs abzudecken. Der Begriff "abdecken" ist hierbei nicht im Sinn eines kompletten Verschließens des Hinterachsausschnittes zu verstehen. Velmehr bewirkt die erfindungsgemäße Luftleiteinrichtung, dass der Hinterachsbereich nicht durchströmt, sondern unterströmt wird. Eine völlige Abschottung des Hinterachsbereichs kann nicht erreicht werden. Ziel der Erfindung ist es jedoch, den Hauptanteil der am Unterboden bei Fahrt des Kraftfahrzeugs strömenden Luft am Hinterachsausschnitt des Kraftfahrzeugs vorbeizuleiten, also eine Unterströmung des Hinterachsbereichs zu erreichen und die Durchströmung des Hinterachsbereichs zu minimieren. Dies wird erfindungsgemäß durch eine an einem Radführungselement der Hinterachse, bevorzugt an einem unteren Querlenker, angeordnete Luftleiteinrichtung erreicht. Für die Restluft, die dennoch in den Hinterachsbereich einströmt, ist hinter der Hinterachse ein Auslass zwischen Luftleiteinrichtung und Unterboden vorzusehen, um das Ausströmen der Restluft zu ermöglichen.

Der Schließungsgrad richtet sich in Form und Größe nach der Strömungstopologie. Ziel ist es, so wenig Luftmasse wie möglich in den Bereich des Hinterachsausschnittes im Unterboden des Kraftfahrzeugs eindringen zu lassen, gleichzeitig aber die Entlüftung aus dem Hinterachsausschnitt nicht zu blockieren.

Das erfindungsgemäße Kraftfahrzeug mit einer Luftleiteinrichtung ist bevorzugt an beiden Rädern der Hinterachse des Kraftfahrzeugs vorgesehen. Je nach Ausgestaltung des Unterbodens, der auf der rechten und der linken Fahrzeugseite beispielsweise wegen der Führung des Abgasanlage unterschiedlich sein kann, können die rechte und die linke Luftleiteinrichtung unterschiedlich gestaltet sein.
- Fig. 1: zeigt eine schematische Seitenansicht auf den Bereich einer Hinterachse eines bekannten Kraftfahrzeugs. Mögliche Ausführungsbeispiele der Erfindung sind in der Zeichnung dargestellt und werden nachfolgend näher erläutert. Es zeigt:
- Fig. 2: eine schematische Seitenansicht auf den Bereich einer Hinterachse eines Kraftfahrzeugs, mit einer erfindungsgemäßen Luftleiteinrichtung,
- Fig. 3: eine der Fig. 2 entsprechende Darstellung eines zweiten Ausführungsbeispiels der Erfindung,
- Fig. 4: eine schematische Darstellung der geometrischen Verhältnisse an einer erfindungsgemäßen Luftleiteinrichtung,
- Fig. 5: verschiedene Ausgestaltungen erfindungsgemäßer Luftleiteinrichtungen im Schnitt,
- Fig. 6: verschiedene Ausgestaltungen des vorderen Abschnitts erfindungsgemäßer Luftleiteinrichtungen im Schnitt,
- Fig. 7: verschiedene Ausgestaltungen des hinteren Abschnitts erfindungsgemäßer Luftleiteinrichtungen im Schnitt,
- Fig. 8 und 9: schematische Darstellungen unterschiedlich breiter Luftleiteinrichtungen in der Unteransicht und
- Fig. 10: verschiedene Ausgestaltungen von Luftleiteinrichtungen in der Unteransicht.

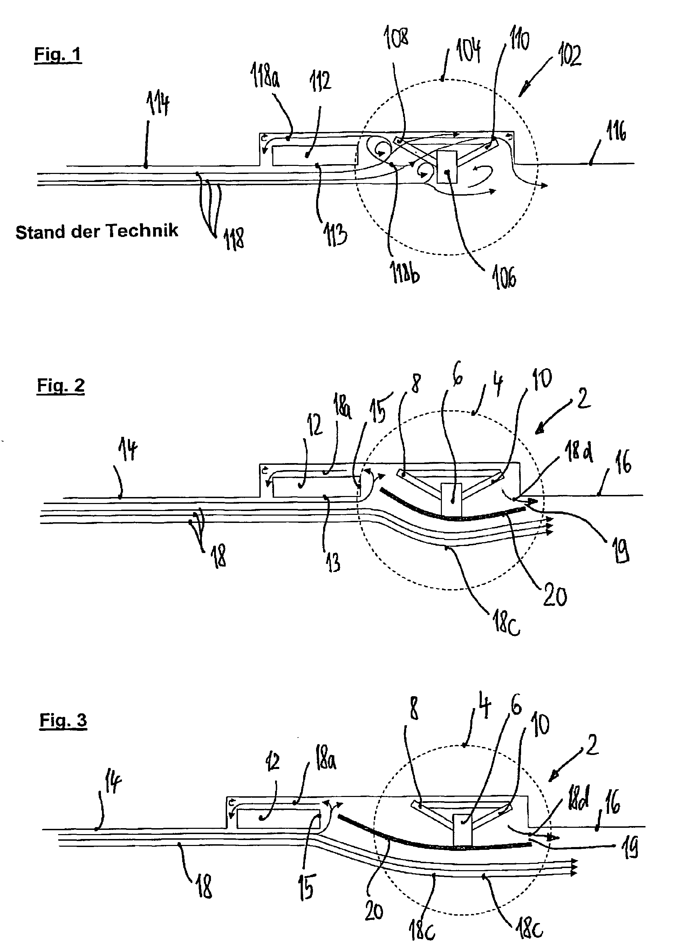

Fig. 1 zeigt den Bereich einer in ihrer Gesamtheit mit 102 bezeichneten Hinterachse eines bekannten Kraftfahrzeugs. Die einzelnen Komponenten der Hinterachse 102, die zur Führung der Hinterräder 104 dienen, sind mit 106,108 und 110 bezeichnet. Vor der Hinterachse 102 ist ein Kraftstoffbehälter 112 angeordnet. Die Unterseite 113 des Kraftstoffbehälters 112 verläuft etwa in Verlängerung des weitgehend ebenen Unterbodens 114 des Kraftfahrzeugs. An die Hinterachse 102 schließt ebenfalls ein weitgehend ebener Unterboden 116 an.

Die Unterbodenströmung, die sich während der Fahrt des Kraftfahrzeugs einstellt, ist mit Pfeilen 118 symbolisiert. Während die Umströmung des Kraftstoffbehälters 112 zum Zweck der Kühlung erwünscht ist (Pfeile 118a), wird der Bereich der Hinterachse 102 in unerwünschter Weise durchströmt (Pfeile 118b), mit beträchtlichen Strömungsverlusten infolge der zerklüfteten Hinterachse 102.

Demgegenüber ist in Fig. 2 eine erfindungsgemäße Ausgestaltung des Bereiches einer in ihrer Gesamtheit mit 2 bezeichneten Hinterachse dargestellt. Die einzelnen Komponenten der Hinterachse 2, die zur Führung der Hinterräder 4 dienen, sind mit 6, 8 und 10 bezeichnet. Vor der Hinterachse 2 ist ein Kraftstoffbehälter 12 angeordnet. Die Unterseite 13 des Kraftstoffbehälters 12 verläuft etwa in Verlängerung des weitgehend ebenen Unterbodens 14 des erfindungsgemäßen Kraftfahrzeugs. An die Hinterachse 2 schließt sich ein weitgehend ebener Unterboden 16 an, der beispielsweise von einem Kofferraumboden, einem Schalldämpfer einer Abgasanlage etc. gebildet wird. Grundsätzlich können die Bereiche 14 und 16 des Unterbodens durch nicht dargestellte Verkleidungsbauteile eine möglichst ebene und strömungsgünstige Form erhalten.

Die Unterbodenströmung, die sich während der Fahrt des Kraftfahrzeugs einstellt, ist mit Pfeilen 18 symbolisiert. Die Umströmung des Kraftstoffbehälters 12 zum Zweck der Kühlung ist erwünscht (Pfeile 18a). Um die Durchströmung des Bereichs der Hinterachse 2 zu vermindern, ist an der Unterseite des Radführungselements 6, beispielsweise eines unteren Querlenkers, eine erfindungsgemäße Luftleiteinrichtung 20 vorgesehen. Somit wird eine Unterströmung des Bereiches der Hinterachse 2 erreicht, dargestellt durch die Pfeile 18c. Da eine völlige Abschottung des Ausschnittes im Unterboden 14, 16 für die Hinterachse nicht möglich ist, verbleibt eine geringe Durchströmung des Hinterachsausschnittes im Unterboden 14, 16 des Kraftfahrzeugs (Pfeile 18b). Eine Freiraum in Form eines Spaltes 19 zwischen dem Unterboden 16 und dem fahrtrichtungsabgewandten Endabschnitt der Luftleiteinrichtung 20 ermöglicht den Austritt dieses Anteils der Unterbodenströmung, symbolisiert durch die Pfeile 18d, aus dem Hinterachsausschnitt im Unterboden 14, 16.

Fig. 3 zeigt ein zweites Ausführungsbeispiel der Erfindung, mit einem im Vergleich zum Ausführungsbeispiel der Fig. 2 größeren Abstand zwischen Kraftstoffbehälter 12 und Hinterachse 2. Der fahrtrichtungszugewandte vordere Endabschnitt der Luftleiteinrichtung 20 liegt dabei höher als im Ausführungsbeispiel der Fig. 2, um das Eindringen der Unterbodenströmung in den Bereich der Hinterachse 2 wirksam zu vermindern.

In beiden Ausführungsbeispielen gemäß den Fig. 2 und 3 liegt der fahrtrichtungszugewandte vordere Endabschnitt der Luftleiteinrichtung 20 oberhalb der Unterseite 13 des Kraftstoffbehälters und unmittelbar benachbart zur Rückseite 15 des Kraftstoffbehälters 12.

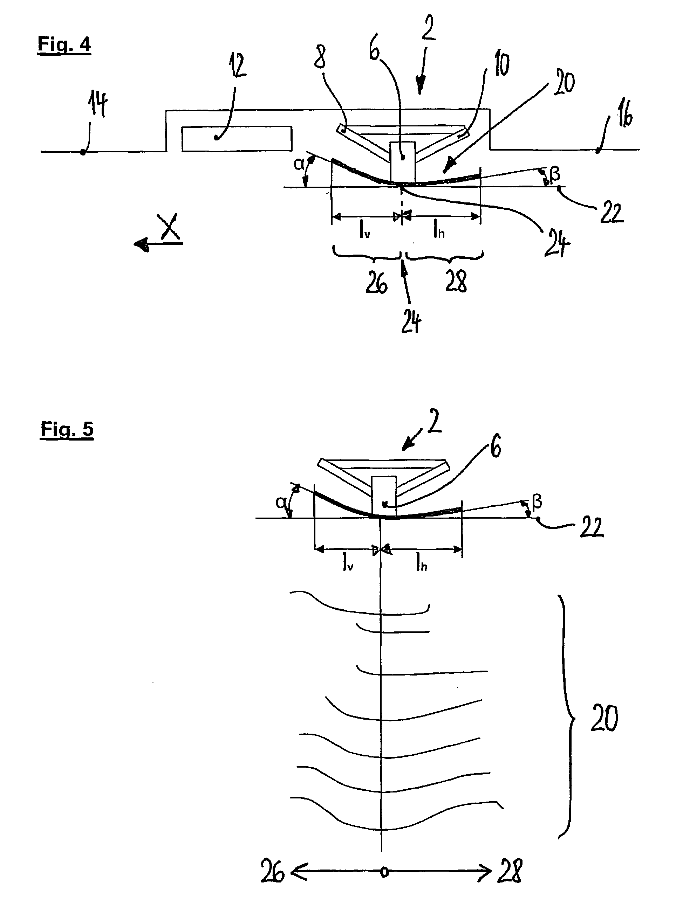

Fig. 4 erläutert die geometrischen Verhältnisse an der Luftleiteinrichtung 20. Die Luftleiteinrichtung 20 ist in einen vorderen und in einen hinteren Abschnitt 26 bzw. 28 unterteilt, mit einem dazwischen liegenden schmalen Übergangsbereich 24. Die beiden Abschnitte 26 und 28 der Luftleiteinrichtung 20 sind in Längsrichtung X des Kraftfahrzeugs gekrümmt und verlaufen unter einem mittleren Winkel α bzw. ß gegenüber einer horizontalen Ebene 22. Die Längen der beiden Abschnitte 26 und 28 sind mit Iv und Ih bezeichnet.

Fig. 5 greift einen Teil der Darstellung von Fig. 4 auf und ist mit weiteren Ausführungsformen von Luftleiteinrichtungen 20 ergänzt. Jede dieser Ausgestaltungen der Luftleiteinrichtung 20 zeichnet sich durch eine Asymmetrie zwischen dem vorderen und dem hinteren Abschnitt 26 und 28 aus.

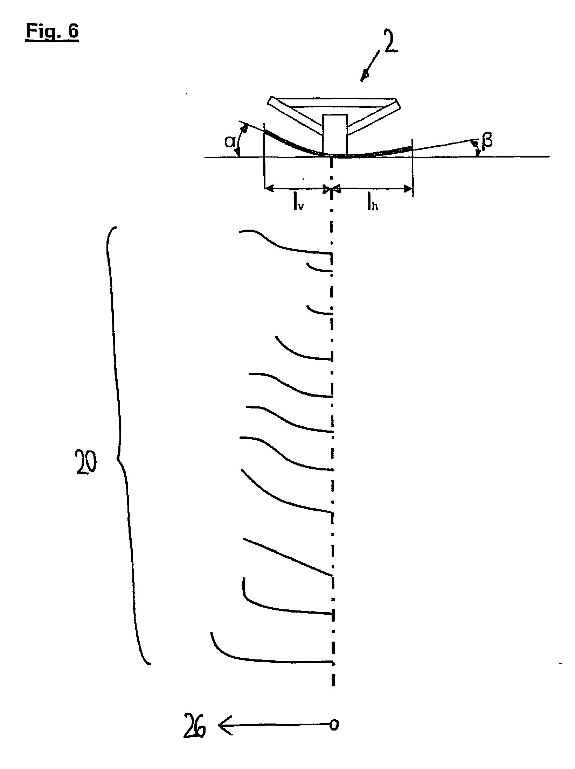

Fig. 6 zeigt mögliche Ausführungsformen vorderer Abschnitte 26 erfindungsgemäßer Luftleiteinrichtungen 20.

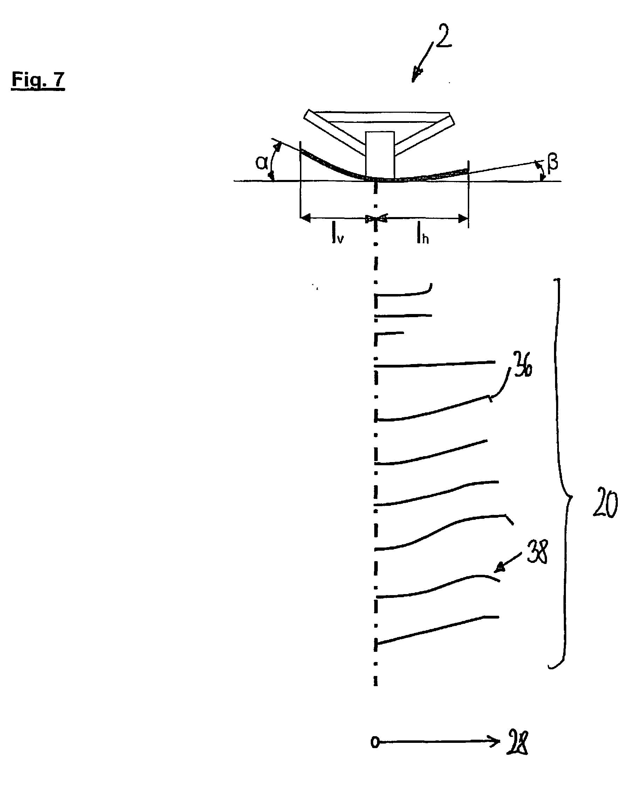

In Fig. 7 sind unterschiedliche Ausgestaltungen der fahrtrichtungsabgewandten Endabschnitte des hinteren Abschnitts 28 erfindungsgemäßer Luftleiteinrichtungen 20 dargestellt. Beispielsweise befindet sich am hinteren Endabschnitt der Luftleiteinrichtung ein so genannter Gurney-Flap 36 oder ein Gegenschwung 38.

Die in den Fig. 6 und 7 dargestellten Abschnitte 26 bzw. 28 können grundsätzlich in beliebiger Weise miteinander kombiniert werden.

Die in den Fig. 5 bis 7 dargestellten Ausführungsformen erfindungsgemäßer Luftleiteinrichtungen 20 variieren je nach Gestaltung des Unterbodens 14, 16. Die im Einzelfall aerodynamisch günstigste Ausführungsform hängt im Wesentlichen von der lokalen Anströmrichtung zu Beginn der Luftleiteinrichtung 20, den Geschwindigkeitskomponenten im Unterbodenbereich und der sich an die Luftleiteinrichtung 20 anschließenden Struktur ab. Weist der Unterboden 16 im Anschluss an die Hinterachse 2 eine glatte Form auf (Diffusorkontur), die widerstandsarm angeströmt werden soll, wird eine richtungsweisende Abströmkontur bevorzugt. Soll ein zerklüfteter Unterboden 16 überströmt werden, ist ein gezielter Strömungsabriss vorzuziehen. Da sich die Luftleiteinrichtung 20 im Hinterachsbereich und damit grundsätzlich im Einflussbereich eines Diffusors befindet, ist eine Abstimmung der Parameter Länge, Breite und Konturierung der Luftleiteinrichtung 20 zur optimalen Gestaltung der Anströmung des stromabwärts der Hinterachse 2 liegenden Bereiches notwendig.

Die Größe der in Fahrzeughochrichtung projizierten Fläche der Luftleiteinrichtung 20 ist von der Bilanz der in den Hinterachsausschnitt eintretenden und austretenden Luftmassenströme abhängig, kann damit also von Fahrzeug zu Fahrzeug variieren. Grundsätzlich kann nicht davon ausgegangen werden, dass sich mit einer Vergrößerung der projizierten Fläche der Luftleiteinrichtung 20 der Luftwiderstand des Kraftfahrzeugs verringert.

Unter Umständen kann auch ein Auslass (Durchgangsöffnung) unmittelbar an der Luftleiteinrichtung 20 zur Entlüftung des Hinterachsausschnitts sinnvoll sein. Ein solcher Auslass oder mehrere solcher Auslässe ist bzw. sind beispielsweise nach Art einer Rampe in aerodynamisch vorteilhafter Form ausgebildet. Der Aufwand hinsichtlich der Entlüftungsmaßnahmen steigt, wenn an der fahrtrichtungszugewandten Vorderkante der Luftleiteinrichtung 20 aufgrund baulicher Gegebenheiten im Unterbodenbereich des Kraftfahrzeugs ein Einströmen von Luft in den Hinterachsausschnitt nicht in ausreichendem Maß verhindert werden kann.

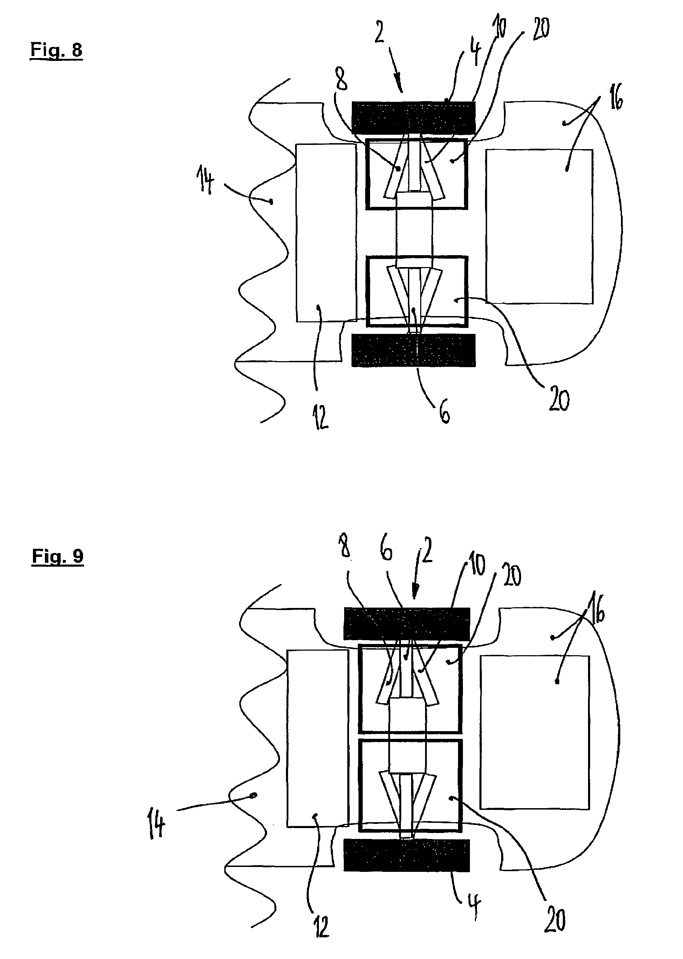

Die Fig. 8 und 9 zeigen in der Unteransicht des Kraftfahrzeugs unterschiedlich breite Luftleiteinrichtungen 20. Während beim Ausführungsbeispiel gemäß Fig. 8 die Luftleiteinrichtungen 20 etwa mit den Radführungselementen 6 enden, erstrecken sich die Luftleiteinrichtung 20 gemäß dem Ausführungsbeispiel der Fig. 9 bis nahe an die Längsmittenebene des Kraftfahrzeugs.

Die Querschnitte durch die Luftleiteinrichtungen 20 gemäß Fig. 5 bis 7 können in Querrichtung Y des Kraftfahrzeugs variieren, das heißt, die Luftleiteinrichtungen 20 können entlang ihrer Breitenerstreckung unterschiedliche Querschnittverläufe aufweisen.

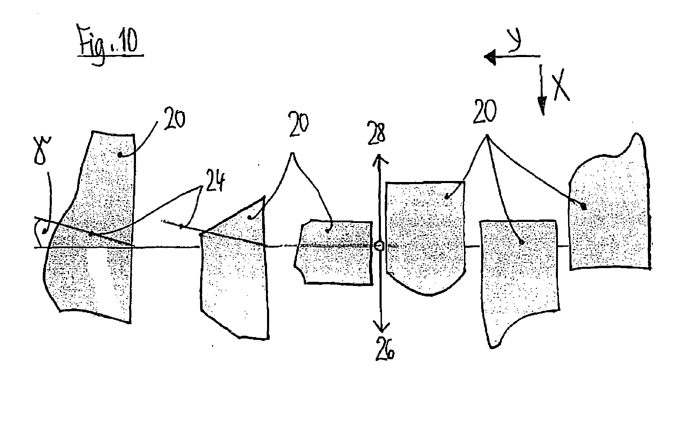

Wie aus Fig. 10 hervorgeht, sind die Luftleiteinrichtungen 20 (abweichend von der Darstellung der Fig. 8 und 9) in einer horizontalen Projektion nicht zwingend rechteckförmig. Fig. 10 zeigt mögliche räumliche Ausgestaltungen von Luftleiteinrichtungen 20 in der Unteransicht, mit unterschiedlich großen vorderen und hinteren Abschnitten 26 bzw. 28. Aus Fig. 10 geht anschaulich hervor, dass je nach Anwendungsfall die Größe und/oder die Form der erfindungsgemäßen Luftleiteinrichtung 20 stark unterschiedlich sein kann. Die Vorder- und/oder Hinterkante der Luftleiteinrichtung 20 können einen Winkel zur Querrichtung Y des Kraftfahrzeugs einschließen oder einen gekrümmten Verlauf aufweisen (S-Schlag, Bogen etc.).

Die erfindungsgemäßen Luftleiteinrichtungen 20 sind im Unterschied zu bekannten Luftleiteinrichtungen gezielt nach aerodynamischen Gesichtspunkten gestaltet und passen sich dem Verlauf des Unterbodens 14 bzw. 16 vor und nach der Hinterachse 2 an. Sie decken einen wesentlichen Ausschnitt der Hinterachse 2 im Unterboden des Kraftfahrzeugs ab und erschweren ein Einströmen der durch die Pfeile 18 gekennzeichneten Unterbodenströmung in den Bereich des Hinterachsausschnittes. Außerdem leiten die Luftleiteinrichtungen 20 die Unterbodenströmung 18 mit sehr geringen Strömungsverlusten, unter Vermeidung von Verwirbelungen, entlang ihrer glatten Außenflächen mit geringen Strömungsverlusten an der Unterseite des Kraftfahrzeugs entlang. Selbstverständlich ergibt sich als Nebeneffekt der Luftleiteinrichtungen 20 ein Schutz der Komponenten 6, 8 und 10 der Hinterachse 2 sowie weiterer Komponenten (beispielsweise einer Antriebswelle) gegenüber Spritzwasser, Steinschlag, Korrosion und anderen Umwelteinflüssen während des Fahrbetriebs. Der Schwerpunkt der Ausgestaltung der erfindungsgemäßen Luftleiteinrichtungen 20 besteht jedoch in ihrer aerodynamischen Wirksamkeit.

Der Winkel α bzw. ß gegenüber der horizontalen Ebene 22 ist, wie oben beschrieben, eine Winkelangabe zur Neigung einer mittleren Steigungsgeraden oder einer mittleren Steigungsebene des vorderen bzw. des hinteren Abschnittes 26 bzw. 28 der Luftleiteinrichtung 20.

Der Übergangsbereich 24 zwischen den beiden Abschnitten 26 und 28 muss nicht exakt in Querrichtung Y des Kraftfahrzeuges verlaufen, sondern kann hiervon unter einem Winkel γ abweichen, wie in Fig. 10 dargestellt. Der Winkel γ orientiert sich bevorzugt an der Ausrichtung derjenigen Komponente 6, 8 und 10 der Hinterachse 2, an der die Luftleiteinrichtung 20 befestigt ist. In besonderer Weise eignet sich der untere Querlenker 6 einer Hinterachse 2, auch Sturzlenker genannt, für die Anbringung einer Luftleiteinrichtung 20.

Die Befestigung der Luftleiteinrichtung 20 erfolgt beispielsweise durch Verschraubung, durch Einrasten, durch Spreiznieten, Klipse, etc.

Die Luftleiteinrichtung 20 weist eine begrenzte Flexibilität auf, um beispielsweise bei Beanspruchung in Folge einer Bordsteinabfahrt oder bei Überfahren eines andersartigen Hindernisses in begrenztem Maße nachgeben und in ihre Ausgangsposition zurückkehren zu können. Auch muss eine ausreichende Stabilität gegenüber einer "Wasserdurchfahrt" gegeben sein. Ein Verrutschen oder Verdrehen der Luftleiteinrichtung 20 gegenüber den Komponenten 6, 8 und 10 der Hinterachse 2 ist jedoch konstruktiv zu verhindern, um eine gleichbleibende definierte Position der Luftleiteinrichtung 20 während der gesamten Lebensdauer des Kraftfahrzeuges zu gewährleisten.

Die Luftleiteinrichtung 20 kann zusätzliche Ausgestaltungen aufweisen, beispielsweise Abwinkelungen oder zusätzliche Leitelemente, um die Kühlluftzufuhr in den Bereich der Betriebsbremse an der Hinterachse 2 zu verbessern. Außerdem können radnahe Flächen der Luftleiteinrichtung 20 derart geformt sein, dass die Zuführung von Kühlluft zu Elementen der Bremsanlage an den Hinterrädern 4 verbessert wird.

Zusammenfassend lässt sich die Erfindung wie folgt beschreiben: Eine Luftleiteinrichtung 20 an einem etwa quer zur Längsrichtung X eines Kraftfahrzeugs verlaufenden Radführungselement 6 einer Hinterachse 2 des Kraftfahrzeugs verläuft im Wesentlichen in einer horizontalen Ebene 22 und ist in einen vorderen Abschnitt 26 und einen hinteren Abschnitt 28 unterteilt. Die beiden Abschnitte 26 bzw. 28 verlaufen mit unterschiedlichen Winkeln α und ß zur horizontalen Ebene 22. Die Luftleiteinrichtung 20 besitzt eine aerodynamisch optimierte Form und erstreckt sich von einem Bereich hinter dem Unterboden 14 bzw. einer Unterbodenverkleidung 14 bis heranreichend an den Kofferraumboden 16. Somit verlaufen die Luftleiteinrichtungen 20 in einem Bereich vor der Hinterachse 2 (Abschnitt 26) und einem Bereich hinter der Hinterachse (Abschnitt 28). Hierbei werden die projizierten offenen Flächen zum Ausschnitt der Hinterachse 2 im Unterboden 14, 16 teilweise abgedeckt. Hierdurch wird ein Einströmen von Luft in den Bereich des Hinterachsausschnittes erschwert. Die Größe und Form der Luftleiteinrichtung 20 wird in aerodynamischen Versuchen und Simulationen in mehreren Optimierungsschleifen ermittelt, so dass sich je nach Kraftfahrzeug unterschiedlich gestaltete Luftleiteinrichtungen 20 ergeben. Dieser iterative Prozess basiert jedoch in allen Fällen auf der erfindungsgemäßen Erkenntnis, dass die Luftleiteinrichtung 20 sich in einem Bereich vor und hinter der Hinterachse 2 erstrecken und in den beiden Abschnitten 26 und 28 mit unterschiedlichen Winkeln α und ß zu einer horizontalen Ebene 22 verlaufen muss. Durch die Größe und die Form der Luftleiteinrichtung 20 insbesondere in ihrem hinteren Abschnitt 28 werden die Abströmbedingungen gezielt auf die Strömungstopologie des Bereiches nach der Hinterachse 2 (Fahrzeugheck) optimiert.

## Patentansprüche

1. Kraftfahrzeug mit einer Luftleiteinrichtung, die an einem etwa quer zur Fahrtrichtung verlaufenden Radführungselement einer Hinterachse eines Kraftfahrzeugs befestigt ist,
**dadurch gekennzeichnet, dass** die Luftleiteinrichtung (20) in ihrer Einbaulage am Kraftfahrzeug im wesentlichen etwa horizontal verläuft und in einen Abschnitt (26) vor der Hinterachse (2) sowie in einen Abschnitt (28) hinter der Hinterachse (2) unterteilt ist, wobei die beiden Abschnitte (26, 28) mit unterschiedlichen Winkeln (α, β) zu einer horizontalen Ebene (22) verlaufen, der Winkel (α) im Abschnitt (26) vor der Hinterachse (2) größer ist als der Winkel (β) im Abschnitt (28) hinter der Hinterachse (2) und die beiden Abschnitte (26, 28) - ausgehend von ihrem Übergangsbereich (24) - aufwärts gerichtet sind.

2. Kraftfahrzeug nach Anspruch 1,
**dadurch gekennzeichnet, dass** der Übergangsbereich (24) zwischen den beiden Abschnitten (26, 28) etwa auf der Höhe der tiefsten Bereichs des Radführungselements (6) verläuft.

3. Kraftfahrzeug nach Anspruch 1 oder 2,
**dadurch gekennzeichnet, dass** sich vor der Hinterachse (2) ein Kraftstoffbehälter (12) befindet, der von der sich bei Fahrt des Kraftfahrzeugs ergebenden Luftströmung (18a) umströmt wird, wobei die Vorderkante der Luftleiteinrichtung (20) hinter dem Kraftstoffbehälter (12) angeordnet ist.

4. Kraftfahrzeug nach einem der vorangegangenen Ansprüche,
**dadurch gekennzeichnet, dass** sich vor der Hinterachse (2) ein Kraftstoffbehälter (12) befindet, der von der sich bei Fahrt des Kraftfahrzeugs ergebenden Luftströmung (18a) umströmt wird, wobei die Vorderkante der Luftleiteinrichtung (20) oberhalb der Unterseite (13) des Kraftstoffbehälters (12) angeordnet ist.

5. Kraftfahrzeug nach Anspruch 3 und/oder 4 ,
**dadurch gekennzeichnet, dass** die Vorderkante der Luftleiteinrichtung (20) unmittelbar benachbart zur fahrtrichtungsabgewandten Rückseite (13) des Kraftstoffbehälters (12) angeordnet ist.

6. Kraftfahrzeug nach einem der vorangegangenen Ansprüche,
**dadurch gekennzeichnet, dass** im Bereich des fahrtrichtungsabgewandten Endabschnitts der Luftleiteinrichtung (20) ein Freiraum (19) zwischen Luftleiteinrichtung (20) und Unterboden (16) des Kraftfahrzeugs vorgesehen ist.

7. Kraftfahrzeug nach einem der vorangegangenen Ansprüche,
**dadurch gekennzeichnet, dass** die Luftleiteinrichtung (20) an ihrem fahrtrichtungsabgewandten Endabschnitt eine Abrisskante (36) aufweist.

8. Kraftfahrzeug nach einem der vorangegangenen Ansprüche 1 bis 6,
**dadurch gekennzeichnet, dass** die Luftleiteinrichtung (20) an ihrem fahrtrichtungsabgewandten Endabschnitt einen Gegenschwung (38) aufweist.

9. Kraftfahrzeug nach einem der vorangegangenen Ansprüche,
**dadurch gekennzeichnet, dass** sich die Luftleiteinrichtung (20) über einen wesentlichen Teil der Breite des Radführungselements (6, 8, 10) erstreckt.

10. Kraftfahrzeug nach einem der Ansprüche 1 bis 8,
**dadurch gekennzeichnet, dass** sich die Luftleiteinrichtung (20) über das Radführungselement (6, 8, 10) in Richtung der Fahrzeugmitte hinaus erstreckt.

11. Kraftfahrzeug nach einem der vorangegangenen Ansprüche,
**dadurch gekennzeichnet, dass** die Luftleiteinrichtung (20) im radnahen Bereich ein Leitelement oder eine Leitfläche aufweist, wodurch Kühlluft auf wenigstens eine Komponente der Radbremse geleitet wird.

## Claims

1. A motor vehicle comprising a spoiler device fastened to a wheel guide element extending approximately transversely of the direction of travel and under the rear axle of a motor vehicle,
**characterised in that** when installed on the vehicle, the spoiler device (20) is approximately horizontal and divided into a portion (26) in front of the rear axle (2) and a portion (28) behind the rear axle (2), wherein the two portions (26, 28) extend at different angles (α, β) to a horizontal plane (22), the angle (α) in the portion (26) in front of the rear axle (2) is greater than the angle (β) in the portion (28) behind the rear axle (2) and the two portions (26, 28) extend upwards, starting from the transition region (24) from one to the other.

2. A vehicle according to claim 1,
**characterised in that** the transition region (24) between the two portions (26, 28) is about level with the lowest region of the wheel guide element (6).

3. A vehicle according to claim 1 or Claim 2,
**characterised in that** a fuel tank (12) is disposed in front of the rear axle (2) and is surrounded by the air flow (18a) when the vehicle is in motion, wherein the front edge of the spoiler device (20) is disposed behind the fuel tank (12).

4. A vehicle according to any of the preceding claims,
**characterised in that** a fuel tank (12) is disposed in front of the rear axle (2) and is surrounded by the air flow (18a) when the vehicle is in motion, wherein the front edge of the spoiler device (20) is situated above the underside (13) of the fuel tank (12).

5. A vehicle according to claim 3 and/or 4,
**characterised in that** the front edge of the spoiler device (20) is in the immediate neighbourhood of the back (13), remote from the direction of travel, of the fuel tank (12).

6. A vehicle according to any of the preceding claims,
**characterised in that** a space (19) between the spoiler device (20) and the bottom (16) of the vehicle is provided in the neighbourhood of the end portion, remote from the direction of travel, of the spoiler device (20).

7. A vehicle according to any of the preceding claims,
**characterised in that** the spoiler device (20) has a breakaway edge (36) at its end portion remote from the direction of travel.

8. A vehicle according to any of claims 1 to 6,
**characterised in that** the spoiler device (20) has a counter-thrust (38) at its end portion remote from the direction of travel.

9. A vehicle according to any of the preceding claims,
**characterised in that** the spoiler device (20) extends over a considerable part of the width of the wheel guide element (6,8,10).

10. A vehicle according to any of claims 1 to 8,
**characterised in that** the spoiler device (20) extends over the wheel guide element (6,8,10) towards the middle of the vehicle.

11. A motor vehicle according to any of the preceding claims,
**characterised in that** the spoiler device (20), in the region near the wheel, has a guide element or guide surface, so as to guide cooling air on to at least one component of the wheel brake.

## Revendications

1. Véhicule comportant un dispositif déflecteur d'air qui est fixé sur un élément de guidage de roue d'un essieu arrière du véhicule s'étendant essentiellement transversalement à la direction de déplacement,
**caractérisé en ce que**
le dispositif déflecteur d'air (20) s'étend essentiellement horizontalement dans sa position de montage sur le véhicule et est subdivisé en une partie (26) située en avant de l'essieu arrière (2) et en une partie (28) située à l'arrière de l'essieu arrière (2), ces deux parties (26, 28) s'étendant en faisant des angles (α, β) différents par rapport à un plan horizontal (22), l'angle (α) de la partie (26) située à l'avant de l'essieu arrière (2) étant supérieur à l'angle (β) de la partie (28) située en arrière de l'essieu arrière (2), et les deux parties (26, 28) étant orientées vers l'avant à partir de leur zone de transition (24).

2. Véhicule conforme à la revendication 1,
**caractérisé en ce que**
la zone de transition (24) entre les deux parties (26, 28) s'étend approximativement à la hauteur de la zone la plus basse de l'élément de guidage de roue (6).

3. Véhicule conforme à la revendication 1 ou 2,
**caractérisé en ce qu'**
à l'avant de l'essieu arrière (2) est monté un réservoir de carburant (12) qui est baigné par l'écoulement d'air (18a) produit lors du déplacement du véhicule, le bord avant du dispositif déflecteur d'air (20) étant situé à l'arrière du réservoir de carburant (12).

4. Véhicule conforme à l'une des revendications précédentes,
**caractérisé en ce qu'**
à l'avant de l'essieu arrière (2) est monté un réservoir de carburant (12) qui est baigné par l'écoulement d'air (18a) produit lors du déplacement du véhicule, le bord avant du dispositif déflecteur d'air (20) étant situé au-dessus de la face inférieure (13) du réservoir de carburant (12).

5. Véhicule conforme à la revendication 3 et/ou 4,
**caractérisé en ce que**
le bord avant du dispositif déflecteur d'air (20) est situé immédiatement au voisinage de la face arrière (13) du réservoir de carburant (12) située à l'opposé de la direction de déplacement.

6. Véhicule conforme à l'une des revendications précédentes,
**caractérisé en ce que**
dans la zone de l'extrémité du dispositif déflecteur d'air (20) située à l'opposé de la direction de déplacement est prévu un espace libre (19) situé entre le dispositif déflecteur d'air (20) et le dessous de caisse (16) du véhicule.

7. Véhicule conforme à l'une des revendications précédentes,
**caractérisé en ce que**
le dispositif déflecteur d'air (20) comporte une arête de décollement (36) dans sa zone d'extrémité située à l'opposé de la direction de déplacement.

8. Véhicule conforme à l'une des revendications 1 à 6,
**caractérisé en ce que**
le dispositif déflecteur d'air (20) comporte une ligne de mouvement antagoniste (38) dans sa zone d'extrémité située à l'opposé de la direction de déplacement.

9. Véhicule conforme à l'une des revendications précédentes,
**caractérisé en ce que**
le dispositif déflecteur d'air (20) s'étend sur une partie importante de la largeur de l'élément de guidage de roue (6, 8, 10).

10. Véhicule conforme à l'une des revendications 1 à 8,
**caractérisé en ce que**
le dispositif déflecteur d'air (20) s'étend sur l'élément de guidage de roue (6, 8, 10) à partir de la partie médiane du véhicule.

11. Véhicule conforme à l'une des revendications précédentes,
**caractérisé en ce que**
le dispositif déflecteur d'air (20) comporte à proximité de la roue un élément de guidage ou une surface de guidage permettant de transférer de l'air de refroidissement sur au moins un composant du frein de roue.
